# EUROPEAN PATENT APPLICATION

(11) **EP 4 043 403 A1**
(43) Date of publication of application: **17.08.2022**
(21) Application number: 20906273.6
(22) Date of filing: 26.10.2020
(51) Int. Cl.: C01G 53/00, C01D 15/06, H01M 4/505, H01M 4/525

(54) **COBALT-FREE POSITIVE ELECTRODE MATERIAL FOR LITHIUM ION BATTERY, PREPARATION METHOD THEREFOR, AND LITHIUM ION BATTERY**

(30) Priority: 26.12.2019 CN 201911370066
(71) Applicant: SVOLT ENERGY TECHNOLOGY CO., LTD, Changzhou, Jiangsu 213200 (CN)
(72) Inventor: JIANG, Weijun, hangzhou, Jiangsu 213200 (CN); QIAO, Qiqi, hangzhou, Jiangsu 213200 (CN); XU, Xinpei, hangzhou, Jiangsu 213200 (CN); SHI, Zetao, hangzhou, Jiangsu 213200 (CN); CHEN, Sixian, hangzhou, Jiangsu 213200 (CN); MA, Jiali, hangzhou, Jiangsu 213200 (CN)
(74) Representative: Cabinet Beaumont
(86) International application number: PCT/CN2020/123633
(87) International publication number: WO 2021/129109

(57) **Abstract**

Provided are a cobalt-free positive electrode material for a lithium ion battery, a preparation method therefor and a lithium ion battery. The method for preparing the cobalt-free positive electrode material for the lithium ion battery comprises: mixing lithium nickel manganese oxide with sulfate, so as to obtain a first mixture; and reacting the first mixture at a predetermined temperature, so as to obtain the cobalt-free positive electrode material. The cobalt-free positive electrode material comprises lithium nickel manganese oxide and a cladding layer of an outer surface thereof, and the cladding layer comprises lithium sulphate. The lithium ion battery comprises the cobalt-free positive electrode material. The cobalt-free positive electrode material has a relatively high electrical performance and a relatively low alkali content.

## Description

### TECHNICAL FIELD

The present disclosure relates to the technical field of lithium ion batteries, for example, to a cobalt-free cathode material for a lithium-ion battery, a method for preparing the same, and a lithium-ion battery.

### BACKGROUND

The quality of cathode materials in lithium ion batteries directly determines the battery properties. Among them, ternary materials with high-energy density have been widely concerned. Common ternary materials mainly include NCM (NiₓCo_{y}Mn_{z}), NCA (NiₓCo_{y}Al_{z}), and the like, among which NCM has high energy density and long cycle life and thus has been widely used in automobile and electronics industries. Polycrystalline high-nickel cobalt-free cathode materials have attracted wide attention from researchers of lithium ion batteries because of their high reversible specific capacity and low cost. However, the high content of alkali(s) (lithium hydroxide and/or lithium carbonate) on the surface of the above-mentioned cathode materials will cause the degradation of the electrical property of the battery.

Therefore, the research on cathode materials of lithium ion batteries needs to be in-depth.

### SUMMARY

The present disclosure provides a method for preparing a cobalt-free cathode material for a lithium-ion battery. The cobalt-free cathode material prepared by the method has low alkali content and high battery property.

The present disclosure provides a method for preparing a cobalt-free cathode material for a lithium-ion battery in an embodiment. The method for preparing a cobalt-free cathode material for a lithium-ion battery includes: mixing lithium nickel manganate with a sulfate to obtain a first mixture, where the sulfate is a salt of a strong acid and a weak base (a salt formed between a strong acid and a weak base); and reacting the first mixture at a predetermined temperature to obtain the cobalt-free cathode material.

When the first mixture of the present disclosure is reacted at a high predetermined temperature, the sulfate may be reacted with residual alkali(s) (lithium hydroxide and/or lithium carbonate) on the surface of lithium nickel manganate, so as to reduce the alkali content in the cobalt-free cathode material, thereby improving the rate capability stability and the cycle capacity retention rate of the cobalt-free cathode material and the charge-discharge property of the lithium-ion battery. Moreover, the cobalt-free cathode active material is prepared by dry method, without introducing solvent(s) and other solution(s), thereby improving the electrical property of the cobalt-free cathode material. In addition, compared with materials such as phosphoric acid, boric acid, and ammonium phosphate, the sulfate can better reduce the alkali content of the cobalt-free cathode material.

In an embodiment, the sulfate is at least one selected from the group consisting of ammonium sulfate, aluminum sulfate, lithium bisulfate, zirconium sulfate, cerium sulfate and tungsten sulfate.

In an embodiment, the predetermined temperature is higher than the melting point of the sulfate.

In an embodiment, the predetermined temperature is 500 °C to 900 °C, such as 500 °C, 600 °C, 700 °C, 800 °C, 900 °C, etc., and the reaction time is 4 hours to 8 hours, such as 4 hours, 5 hours, 6 hours, 7 hours, 8 hours, etc.

In an embodiment, in the first mixture, the mass ratio of sulfur atoms in the sulfate to the lithium nickel manganate is 0.1% to 0.5%, such as 0.1%, 0.2%, 0.3%, 0.4%, 0.5%, etc.

In an embodiment, the reaction of the first mixture is carried out in an oxygen-containing environment, and the volume percentage of oxygen in the oxygen-containing environment is 20% to 100%, such as 20%, 30%, 40%, 50%, 60%, 70%, 80%, 90%, 100%, etc.

In an embodiment, the lithium nickel manganate and the sulfate are mixed by a high-speed mixing equipment for 10 minutes to 20 minutes, such as 10 minutes, 11 minutes, 12 minutes, 13 minutes, 14 minutes, 15 minutes, 16 minutes, 17 minutes, 18 minutes, 19 minutes, 20 minutes, etc., at a rotational speed of 2000 rpm to 3000 rpm, such as 2000 rpm, 2100 rpm, 2200 rpm, 2300 rpm, 2400 rpm, 2500 rpm, 2600 rpm, 2700 rpm, 2800 rpm, 2900 rpm, 3000 rpm, etc.

The present disclosure provides a cobalt-free cathode material for a lithium-ion battery in an embodiment. The cobalt-free cathode material includes lithium nickel manganate and a cladding layer. The cladding layer is cladded on the outer surface of the lithium nickel manganate, and the material of the cladding layer includes lithium sulfate.

The alkali content of the cobalt-free cathode material in the present disclosure is low, thereby improving the rate capability stability and the cycle capacity retention rate of the cobalt-free cathode material and the charge-discharge property of the lithium-ion battery. Moreover, the cladding layer is cladded on the outer surface of the lithium nickel manganate, which can reduce the contact between the lithium nickel manganate and the electrolyte and avoid the side reaction(s) between the lithium nickel manganate and other substances such as the electrolyte, thereby effectively ensuring good battery properties of the lithium-ion battery.

In an embodiment, the cobalt-free cathode material satisfies at least one of the following conditions: the free water content of the cobalt-free cathode material is less than 200 ppm; the specific surface area of the cobalt-free cathode material is 0.2 m²/g to 0.9 m²/g, such as 0.2 m²/g, 0.3 m²/g, 0.4 m²/g, 0.5 m²/g, 0.6 m²/g, 0.7 m²/g, 0.8 m²/g, 0.9 m²/g, etc.; and the average particle size of the cobalt-free cathode material is 5 µm to 15 µm, such as 5 µm, 6 µm, 7 µm, 8 µm, 9 µm, 10 µm, 11 µm, 12 µm, 13 µm, 14 µm, 15 µm, etc.

The present disclosure provides a lithium-ion battery in an embodiment. The lithium-ion battery includes the cobalt-free cathode material described above.

Compared with the related art, the lithium-ion battery in the embodiments of the present disclosure has better charge-discharge property, better cycle capacity retention rate, and better rate capability stability.

### BRIEF DESCRIPTION OF DRAWINGS

The drawings are used to provide a further understanding of the technical solutions of the present disclosure, constitute a part of the specification, explain the technical solutions of the present application in conjunction with the embodiments of the present disclosure, and do not limit the technical solutions of the present disclosure.
FIG. 1 is a flowchart of a method for preparing a cobalt-free cathode material according to an embodiment of the present disclosure.
FIG. 2 is a structure diagram of a cobalt-free cathode material according to an embodiment of the present disclosure.
FIG. 3 is a scanning electron microscope graph of lithium nickel manganate according to an embodiment of the present disclosure.
FIG. 4 is a scanning electron microscope graph of a cobalt-free cathode material according to an embodiment of the present disclosure.
FIG. 5 is an energy spectrum graph of lithium nickel manganate according to an embodiment of the present disclosure.
FIG. 6 is an energy spectrum graph of a cobalt-free cathode material according to an embodiment of the present disclosure.
FIG. 7 is a charge-discharge graph of lithium-ion battery A and lithium-ion battery B according to an embodiment of the present disclosure.

### DETAILED DESCRIPTION

In an embodiment, the preparation of lithium nickel manganate includes the following steps. LiOH and a precursor NiₓMn_{y}(OH)₂ (0.80≤x≤0.95, and 0.05≤y≤0.20) are mixed by a high-speed mixing equipment for 10 minutes to 20 minutes at a rotational speed of 2000 rpm to 3000 rpm. The mixed materials are reacted in a box-type atmosphere furnace in an oxygen atmosphere (the concentration of oxygen is greater than or equal to 95% and the oxygen flow rate is 2 L/min to 20 L/min) for 8 hours to 12 hours at a reaction temperature of 700 °C to 850 °C. Then the cathode active material lithium nickel manganate (polycrystalline material) is obtained after natural cooling. However, the surface of the directly prepared lithium nickel manganate has more residual alkalis such as lithium hydroxide and lithium carbonate. If such lithium nickel manganite is directly used as the cathode material, the property of the lithium-ion battery will be degraded.

For the subsequent homogeneous reaction of the cathode active material lithium nickel manganate and the sulfate, the lithium nickel manganate prepared by the method may be further crushed by a crushing equipment to obtain powdered lithium nickel manganate, and the powdered lithium nickel manganate is then sieved by a sieve with a mesh size of 300 to 400 to obtain lithium nickel manganate with suitable particle size.

In an embodiment of the present disclosure, the sulfate is at least one selected from the group consisting of ammonium sulfate, aluminum sulfate, lithium bisulfate, zirconium sulfate, cerium sulfate and tungsten sulfate. In this way, the preceding sulfate can be quickly and effectively reacted with the residual alkali(s) on the surface of lithium nickel manganite and does not have any side reaction with lithium nickel manganate, which does not affect the property of the cobalt-free cathode material, so as to ensure the battery properties such as rate capability, cycle capacity retention rate, charge-discharge property of the lithium-ion battery. When ammonium sulfate is used, ammonium sulfate is reacted with residual alkali(s) in the subsequent reaction to generate lithium sulfate, lithium sulfate is cladded on the surface of lithium nickel manganate, and ammonium ions are reacted with hydroxide to form ammonia gas, thereby achieving the purpose of reducing the content of residual alkali(s) and compared with other sulfates, better reducing the residual alkali(s) on the surface of lithium nickel manganite. When other metal sulfates except lithium bisulfate are used, the sulfate is reacted with residual alkali(s) to generate lithium sulfate which is cladded on the surface of lithium nickel manganite, and metal ions are reacted at high temperature to generate metal oxides which may also be cladded on the surface of lithium nickel manganite. In this way, the cladding layer of lithium nickel manganate includes lithium sulfate and metal oxides, and the main component is lithium sulfate.

In an embodiment of the present disclosure, in order to ensure the uniform mixing of lithium nickel manganate and the sulfate in the first mixture, lithium nickel manganate and the sulfate are mixed by a high-speed mixing equipment for 10 minutes to 20 minutes at a rotational speed of 2000 rpm to 3000 rpm. In this way, lithium nickel manganate and the sulfate may be quickly and uniformly mixed, thereby improving the cladding uniformity of lithium sulfate and other products obtained in the subsequent reaction on the surface of lithium nickel manganate.

In an embodiment of the present disclosure, in the first mixture, the mass ratio of sulfur atoms in the sulfate to the lithium nickel manganate is 0.1% to 0.5%. In this way, with the sulfur content of the preceding ratio, the residual alkali(s) on the surface of lithium nickel manganite can be effectively removed as much as possible, thereby improving the rate capability stability and the cycle capacity retention rate of the cobalt-free cathode material and the charge-discharge property of the lithium-ion battery. If the mass ratio of sulfur atoms in the sulfate to the lithium nickel manganate is less than 0.1%, the amount of the sulfate is relatively low, and after the reaction, the surface of lithium nickel manganate still has a relatively high content of residual alkali(s); if the mass ratio of sulfur atoms in the sulfate to the lithium nickel manganate is more than 0.5%, the amount of the sulfate is relatively high, and after the reaction with lithium nickel manganate, the remaining amount of the sulfate is large, which affects the ion transport of the cobalt-free cathode material and hinders the deintercalation of lithium ions, thereby causing a low electrochemical property of the cobalt-free cathode material and affecting the battery properties such as rate capability, cycle capacity retention, charge-discharge property, etc.

In an embodiment of the present disclosure, the predetermined temperature is higher than the melting point of the sulfate. In this way, when the sulfate is reacted with the residual alkali(s) on the surface of lithium nickel manganate, the sulfate is in a molten state, which, on the one hand, can further improve the completion of reaction between sulfate and residual alkali(s), and on the other hand, can improve the distribution uniformity of lithium sulfate obtained by reaction, thereby improving the cladding uniformity of lithium sulfate on the surface of lithium nickel manganite. Therefore, after the reaction, the surface of lithium nickel manganate is cladded with a cladding layer, which can prevent lithium nickel manganate from contacting and reacting with the electrolyte in the lithium-ion battery, thereby improving the stability of lithium nickel manganate. Compared with the existing cladding materials such as carbon and graphene, sulfate and lithium sulfate cladding layers have better wettability with the active material lithium nickel manganate, which greatly improves the cladding uniformity and can better remove residual alkali(s).

In an embodiment of the present disclosure, the predetermined temperature is 500 °C to 900 °C, and the reaction time is 4 hours to 8 hours. In this way, on the one hand, the sulfate and the residual alkali(s) can be fully reacted smoothly, and on the other hand, the sulfate can be made into a molten state, so that lithium sulfate can uniformly form a cladding layer on the surface of lithium nickel manganate after the reaction with the residual alkali(s), so as to improve the stability of lithium nickel manganite. If the temperature is lower than 500 °C, the reaction between the sulfate and residual alkali(s) is relatively insufficient, that is, the alkali removal effect is relatively poor. If the temperature is higher than 900 °C, it is easy for lithium nickel manganate to form anoxic compounds, promote the growth of crystal grains, and reduce the specific surface area, which is not conducive to the deintercalation of lithium ions in the lithium nickel manganate material.

In an embodiment of the present disclosure, the reaction of the first mixture is carried out in an oxygen-containing environment, and the volume percentage of oxygen in the oxygen-containing environment is 20% to 100%. In this way, the transformation from unstable Ni³⁺ to stable Ni²⁺ can be inhibited in the oxygen-containing environment. If the oxygen content is lower than 20%, it is easy to cause the redecomposition of the lithium nickel manganate material, and it is difficult to produce the required products.

In an embodiment of the present disclosure, after the cobalt-free cathode material is obtained in step S200, the method further includes the following steps. The cobalt-free cathode material is sieved by a sieve with a mesh size of 300 to 400 to obtain the cobalt-free cathode material with suitable particle size.

In an embodiment of the present disclosure, when the first mixture is reacted at a high predetermined temperature, the sulfate may be reacted with residual alkali(s) (lithium hydroxide and/or lithium carbonate) on the surface of lithium nickel manganate, so as to reduce the alkali content in the cobalt-free cathode material, thereby improving the rate capability stability and the cycle capacity retention rate of the cobalt-free cathode material and the charge-discharge property of the lithium-ion battery. Moreover, the cobalt-free cathode active material is prepared by dry method, without introducing solvent(s) and other solution(s), thereby improving the electrical property of the cobalt-free cathode material. In addition, compared with materials such as phosphoric acid, boric acid, and ammonium phosphate, the sulfate can better reduce the alkali content of the cobalt-free cathode material.

In an embodiment of the present disclosure, the cobalt-free cathode material prepared by the preceding method satisfies at least one of the following conditions.

The free water content of the cobalt-free cathode material is less than 200 ppm. In this way, the deterioration caused by the reaction between electrolyte and water can be avoided, so as to improve the stability of electrolyte and prolong the service life of the lithium-ion battery. If the free water content is greater than 200 ppm, the free water is easily reacted with the electrolyte, which affects the property of the electrolyte.

The specific surface area of the cobalt-free cathode material is 0.2 m²/g to 0.9 m²/g. In this way, not only the cobalt-free cathode material has good activity, but also the reaction between the cobalt-free cathode material and the electrolyte in the lithium-ion battery can be prevented, so as to ensure good electrode property of the cobalt-free cathode material. If the specific surface area of the cobalt-free cathode material is less than 0.2 m²/g, the activity of the cobalt-free cathode material is relatively low, which affects the charge-discharge property of the lithium-ion battery. If the specific surface area of the cobalt-free cathode material is greater than 0.9 m²/g, the risk of the reaction between the cobalt-free cathode material and the electrolyte is high, which affects the battery properties of the lithium-ion battery.

The average particle size of the cobalt-free cathode material is 5 µm to 15 µm. In this way, the cobalt-free cathode material with the preceding particle size has suitable specific surface area, so that not only the cobalt-free cathode material has good activity, but also the reaction between the cobalt-free cathode material and the electrolyte in the lithium-ion battery can be prevented, so as to ensure good electrode property of the cobalt-free cathode material. If the average particle size of the cobalt-free cathode material is less than 5 µm, the specific surface area of the cobalt-free cathode material is large. If the average particle size of the cobalt-free cathode material is greater than 15 µm, the specific surface area of the cobalt-free cathode material is small.

An embodiment of the present disclosure provides a cobalt-free cathode material for a lithium-ion battery. The alkali content of the cobalt-free cathode material is low, thereby improving the rate capability stability and the cycle capacity retention rate of the cobalt-free cathode material and the charge-discharge property of the lithium-ion battery. Moreover, the cladding layer is cladded on the outer surface of the lithium nickel manganate, which can reduce the contact between the lithium nickel manganate and the electrolyte and avoid the side reaction(s) between the lithium nickel manganate and other substances such as the electrolyte, thereby effectively ensuring good battery properties of the lithium-ion battery.

In an embodiment of the present disclosure, the cobalt-free cathode material prepared by the preceding method satisfies at least one of the following conditions.

The free water content of the cobalt-free cathode material is less than 200 ppm. In this way, the deterioration caused by the reaction between electrolyte and water can be avoided, so as to improve the stability of electrolyte and prolong the service life of the lithium-ion battery. If the free water content is greater than 200 ppm, the free water is easily reacted with the electrolyte, which affects the property of the electrolyte. The specific surface area of the cobalt-free cathode material is 0.2 m²/g to 0.9 m²/g. In this way, not only the cobalt-free cathode material has good activity, but also the reaction between the cobalt-free cathode material and the electrolyte in the lithium-ion battery can be prevented, so as to ensure good electrode property of the cobalt-free cathode material. If the specific surface area of the cobalt-free cathode material is less than 0.2 m²/g, the activity of the cobalt-free cathode material is relatively low, which affects the charge-discharge property of the lithium-ion battery. If the specific surface area of the cobalt-free cathode material is greater than 0.9 m²/g, the risk of the reaction between the cobalt-free cathode material and the electrolyte is high, which affects the battery properties of the lithium-ion battery. The average particle size of the cobalt-free cathode material is 5 µm to 15 µm. In this way, the cobalt-free cathode material with the preceding particle size has suitable specific surface area, so that not only the cobalt-free cathode material has good activity, but also the reaction between the cobalt-free cathode material and the electrolyte in the lithium-ion battery can be prevented, so as to ensure good electrode properties of the cobalt-free cathode material. If the average particle size of the cobalt-free cathode material is less than 5 µm, the specific surface area of the cobalt-free cathode material is large. If the average particle size of the cobalt-free cathode material is greater than 15 µm, the specific surface area of the cobalt-free cathode material is small.

In an embodiment of the present disclosure, the cobalt-free cathode material can be prepared by the preceding method for preparing a cobalt-free cathode material for a lithium-ion battery. The requirements for lithium nickel manganate and sulfate in the cobalt-free cathode material are consistent with the requirements for lithium nickel manganate and sulfate in the preceding preparation method, which will not be repeated herein.

In another aspect of the present disclosure, the present disclosure provides a lithium-ion battery. In an embodiment of the present disclosure, the lithium-ion battery includes the preceding cobalt-free cathode material. In this way, the lithium-ion battery has good charge-discharge property, good cycle capacity retention rate, and good rate capability stability. It is to be understood by those skilled in the art that the lithium-ion battery has all the characteristics and advantages of the preceding cobalt-free cathode material, which will not be repeated herein.

### Example 1

This example provides a cobalt-free cathode material. The specific preparation method includes the following steps.

In step (1), LiOH and a precursor Ni_{0.92}Mn_{0.08}(OH)₂ were mixed by a high-speed mixing equipment for 20 minutes at a rotational speed of 2000 rpm; the mixed materials were reacted in a box-type atmosphere furnace in an oxygen atmosphere (the concentration of oxygen was greater than or equal to 95%, and the oxygen flow rate was 20 L/min) for 10 hours at a reaction temperature of 750 °C; and after the reaction, the reaction product was cooled naturally and sieved by a sieve with a mesh size of 400 to obtain a cathode active material lithium nickel manganite.

In step (2), lithium nickel manganite obtained in step (1) and ammonium sulfate were mixed by the high-speed mixing equipment for 10 minutes at a rotational speed of 2000 rpm to obtain a first mixture, where in the first mixture, the mass ratio of sulfur atoms in ammonium sulfate to lithium nickel manganite was 0.4%; then, the obtained first mixture was reacted at 500 °C for 6 hours in a reaction atmosphere in which the volume percentage of oxygen was 95%; and after the reaction, the reaction product was cooled naturally and sieved by a sieve with a mesh size of 400 to obtain the cobalt-free cathode material.

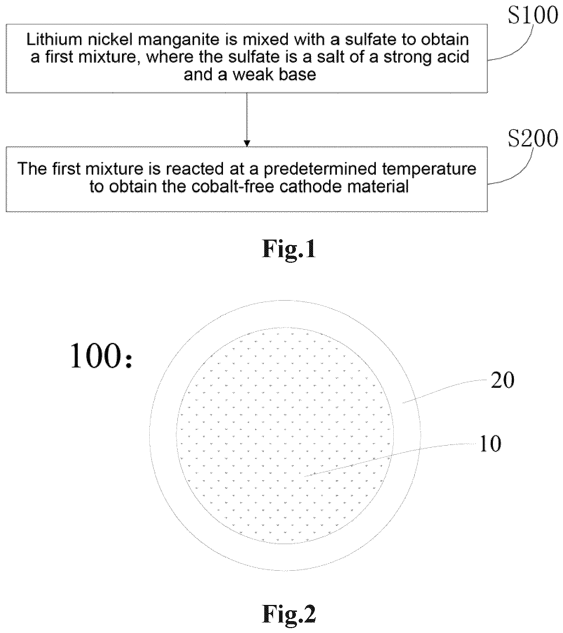

FIG. 1 is a flowchart of a method for preparing a cobalt-free cathode material according to an embodiment of the present disclosure. In S100, lithium nickel manganate is mixed with a sulfate to obtain a first mixture, where the sulfate is a salt of a strong acid and a weak base. In S200, the first mixture is reacted at a predetermined temperature to obtain the cobalt-free cathode material.

FIG. 2 is a structure diagram of a cobalt-free cathode material according to an embodiment of the present disclosure. It can be seen from FIG. 2 that the cobalt-free cathode material 100 of the present disclosure includes lithium nickel manganate 10 and a cladding layer 20. The cladding layer 20 is cladded on the outer surface of lithium nickel manganite 10, and the material of the cladding layer 2 includes lithium sulfate.

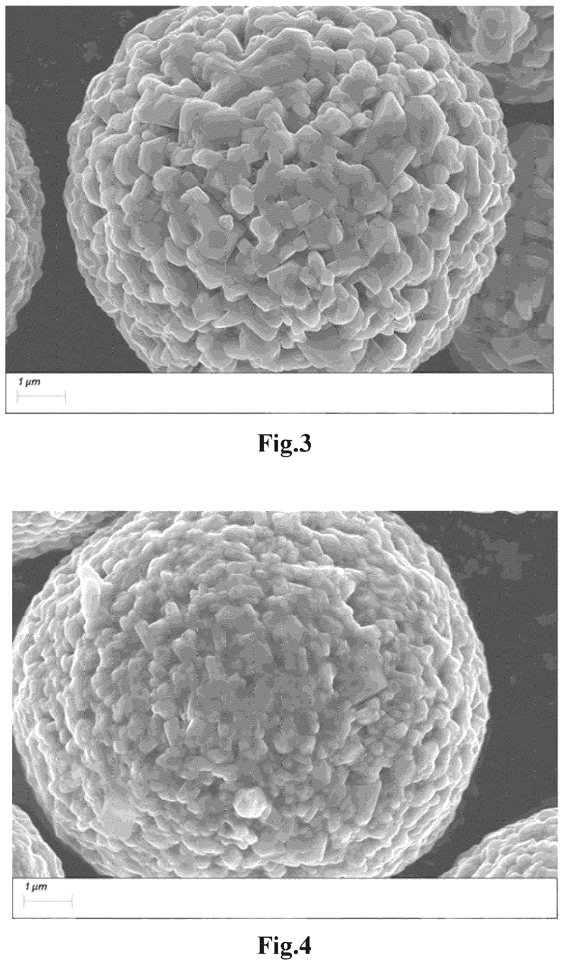

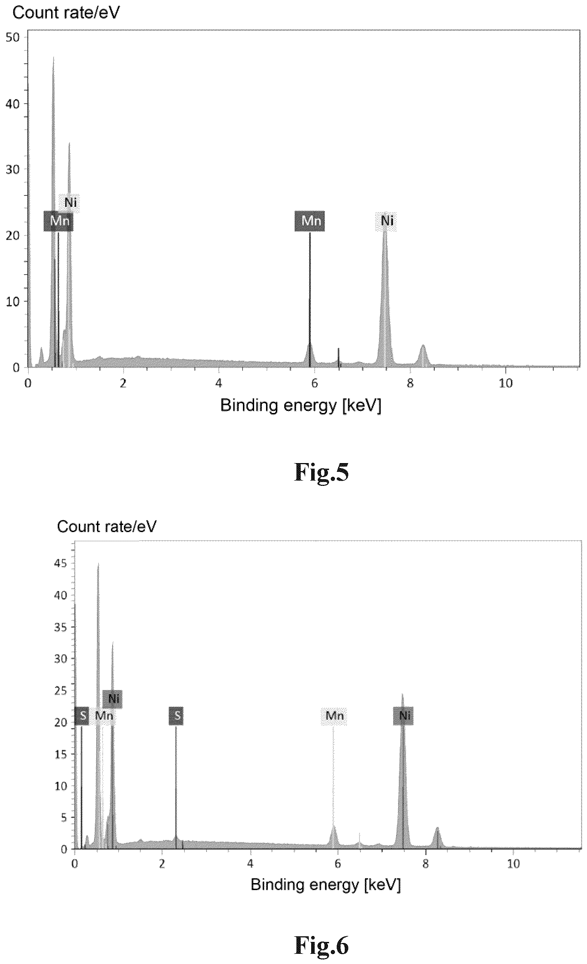

FIG. 3 is a scanning electron microscope graph of lithium nickel manganate according to an embodiment of the present disclosure. FIG. 5 is an energy spectrum (EDS) of lithium nickel manganate according to an embodiment of the present disclosure. FIG. 4 is a scanning electron microscope graph of a cobalt-free cathode material according to an embodiment of the present disclosure. FIG. 6 is an energy spectrum (EDS) of a cobalt-free cathode material according to an embodiment of the present disclosure. It can be seen from FIG. 3 and FIG. 4 that compared with lithium nickel manganate in FIG. 3, the surface of lithium nickel manganate in FIG. 4 is cladded with a layer of substance. It can be seen from EDS energy spectra in FIG. 5 and FIG. 6 that the substance on the surface contains S element. Therefore, it can be seen that the substance cladded on the surface of lithium nickel manganate is lithium sulfate, and ammonium sulfate is reacted with residual alkali(s) to generate lithium sulfate which is cladded on the surface of lithium nickel manganate, and ammonium ions are reacted with hydroxide to form ammonia gas, thereby reducing the content of residual alkali(s).

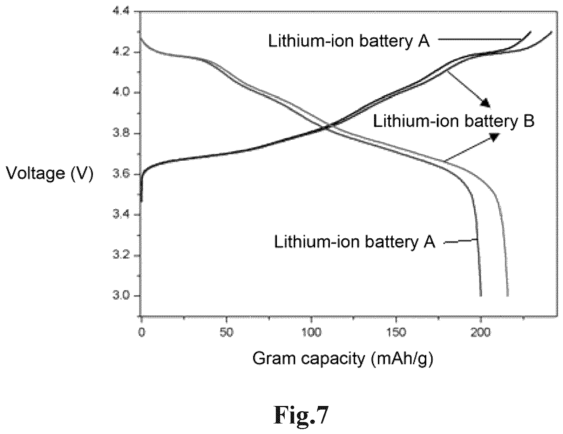

The obtained lithium nickel manganate and cobalt-free cathode material were respectively assembled with a negative electrode (lithium plate), electrolyte (solute: lithium hexafluorophosphate, and solvent: vinyl carbonate EC + EMC methyl ethyl carbonate + DMC dimethyl carbonate to form lithium-ion batter A and lithium-ion battery B. The charge-discharge properties of lithium-ion battery A and lithium-ion battery B were tested, respectively. The results of charge-discharge property test (discharge voltage is 3.0 V to 4.3 V) are shown in FIG. 7 and Table 1 below. In conjunction with FIG. 7 and Table 1, it can be seen that compared with lithium nickel manganate before cladded, the cobalt-free cathode material after cladded improves the specific discharge capacity of the lithium-ion battery, the specific capacity of the lithium-ion battery increases from 199.9 mAh/g to 215.7 mAh/g at the discharge rate of 0.1 C, the first efficiency increases from 86.84% to 88.912%, and the specific capacity increases from 186.9 mAh/g to 195.4 mAh/g at the discharge rate of 1 C.

The free alkali contents of the obtained lithium nickel manganate and cobalt-free cathode material were tested by chemical titration. The test results are shown in Table 2 below. Compared with lithium nickel manganate before cladded, the contents of lithium carbonate and lithium hydroxide in the cobalt-free cathode material after cladded are lower, and the total alkali content is reduced from 1.14% to 0.70%, that is, ammonium sulfate effectively reduces the residual alkali(s) on the surface of lithium nickel manganate.

### Example 2

Ammonium sulfate and lithium nickel manganate prepared in Example 1 were used to prepare a cobalt-free cathode material (lithium nickel manganite cladded with ammonium sulfate) by the same method steps as those in Example 1. The difference between Example 2 and Example 1 is that in Example 2, the mass ratio of sulfur atoms in ammonium sulfate to lithium nickel manganate in the first mixture was 0.5%. Then, the obtained first mixture was reacted at 500 °C for 6 hour in a reaction atmosphere in which the volume percentage of oxygen was 95%. After the reaction, the reaction product was cooled naturally and sieved by a sieve with a mesh size of 400 to obtain the cobalt-free cathode material.

The obtained cobalt-free cathode material, a negative electrode, and electrolyte were assembled into a lithium ion battery. The specific discharge capacity of the lithium-ion battery and the alkali content of the prepared cobalt-free cathode material were tested by the same method as that in Example 1. The test results are shown in Tables 1 and 2.

### Example 3

This example provides a cobalt-free cathode material. The specific preparation method includes the following steps.

Ammonium sulfate and lithium nickel manganate prepared in Example 1 were used to prepare a cobalt-free cathode material (lithium nickel manganite cladded with ammonium sulfate) by the same method steps as those in Example 1. The difference between Example 3 and Example 1 is that in Example 3, the mass ratio of sulfur atoms in ammonium sulfate to lithium nickel manganate in the first mixture was 0.1%. Then, the obtained first mixture was reacted at 500 °C for 6 hour in a reaction atmosphere in which the volume percentage of oxygen was 95%. After the reaction, the reaction product was cooled naturally and sieved by a sieve with a mesh size of 400 to obtain the cobalt-free cathode material.

The obtained cobalt-free cathode material, a negative electrode, and electrolyte were assembled into a lithium ion battery. The specific discharge capacity of the lithium-ion battery and the alkali content of the prepared cobalt-free cathode material were tested by the same method as that in Example 1. The test results are shown in Tables 1 and 2.

### Example 4

This example provides a cobalt-free cathode material. The specific preparation method includes the following steps.

Ammonium sulfate and lithium nickel manganate prepared in Example 1 were used to prepare a cobalt-free cathode material (lithium nickel manganite cladded with ammonium sulfate) by the same method steps as those in Example 1. The difference between Example 4 and Example 1 is that in Example 4, the mass ratio of sulfur atoms in ammonium sulfate to lithium nickel manganate in the first mixture was 0.05%. Then, the obtained first mixture was reacted at 500 °C for 6 hour in a reaction atmosphere in which the volume percentage of oxygen was 95%. After the reaction, the reaction product was cooled naturally and sieved by a sieve with a mesh size of 400 to obtain the cobalt-free cathode material.

The obtained cobalt-free cathode material, a negative electrode, and electrolyte were assembled into a lithium ion battery. The specific discharge capacity of the lithium-ion battery and the alkali content of the prepared cobalt-free cathode material were tested by the same method as that in Example 1. The test results are shown in Tables 1 and 2.

### Example 5

This example provides a cobalt-free cathode material. The specific preparation method includes the following steps.

Ammonium sulfate and lithium nickel manganate prepared in Example 1 were used to prepare a cobalt-free cathode material (lithium nickel manganite cladded with ammonium sulfate) by the same method steps as those in Example 1. The difference between Example 5 and Example 1 is that in Example 5, the mass ratio of sulfur atoms in ammonium sulfate to lithium nickel manganate in the first mixture was 0.6%. Then, the obtained first mixture was reacted at 500 °C for 6 hour in a reaction atmosphere in which the volume percentage of oxygen was 95%. After the reaction, the reaction product was cooled naturally and sieved by a sieve with a mesh size of 400 to obtain the cobalt-free cathode material.

The obtained cobalt-free cathode material, a negative electrode, and electrolyte were assembled into a lithium ion battery. The specific discharge capacity of the lithium-ion battery and the alkali content of the prepared cobalt-free cathode material were tested by the same method as that in Example 1. The test results are shown in Tables 1 and 2.

### Example 6

This example provides a cobalt-free cathode material. The specific preparation method includes the following steps.

Ammonium sulfate and lithium nickel manganate prepared in Example 1 were used to prepare a cobalt-free cathode material (lithium nickel manganite cladded with ammonium sulfate) by the same method steps as those in Example 1. The difference between Example 6 and Example 1 is that in Example 6, the temperature of the reaction between ammonium sulfate and lithium nickel manganate was 600 °C.

The obtained cobalt-free cathode material, a negative electrode, and electrolyte were assembled into a lithium ion battery. The specific discharge capacity of the lithium-ion battery and the alkali content of the prepared cobalt-free cathode material were tested by the same method as that in Example 1. The test results are shown in Tables 1 and 2.

### Example 7

This example provides a cobalt-free cathode material. The specific preparation method includes the following steps.

Ammonium sulfate and lithium nickel manganate prepared in Example 1 were used to prepare a cobalt-free cathode material (lithium nickel manganite cladded with ammonium sulfate) by the same method steps as those in Example 1. The difference between Example 7 and Example 1 is that in Example 7, the temperature of the reaction between ammonium sulfate and lithium nickel manganate was 700 °C.

The obtained cobalt-free cathode material, a negative electrode, and electrolyte were assembled into a lithium ion battery. The specific discharge capacity of the lithium-ion battery and the alkali content of the prepared cobalt-free cathode material were tested by the same method as that in Example 1. The test results are shown in Tables 1 and 2.

### Example 8

This example provides a cobalt-free cathode material. The specific preparation method includes the following steps.

Ammonium sulfate and lithium nickel manganate prepared in Example 1 were used to prepare a cobalt-free cathode material (lithium nickel manganite cladded with ammonium sulfate) by the same method steps as those in Example 1. The difference between Example 8 and Example 1 in that in Example 8, the temperature of the reaction between ammonium sulfate and lithium nickel manganate was 400 °C.

The obtained cobalt-free cathode material, a negative electrode, and electrolyte were assembled into a lithium ion battery. The specific discharge capacity of the lithium-ion battery and the alkali content of the prepared cobalt-free cathode material were tested by the same method as that in Example 1. The test results are shown in Tables 1 and 2.

### Example 9

This example provides a cobalt-free cathode material. The specific preparation method includes the following steps. Ammonium sulfate and lithium nickel manganate prepared in Example 1 were used to prepare a cobalt-free cathode material (lithium nickel manganite cladded with ammonium sulfate) by the same method steps as those in Example 1. The difference between Example 9 and Example 1 is that in Example 9, the temperature of the reaction between ammonium sulfate and lithium nickel manganate was 900 °C.

The obtained cobalt-free cathode material, a negative electrode, and electrolyte were assembled into a lithium ion battery. The specific discharge capacity of the lithium-ion battery and the alkali content of the prepared cobalt-free cathode material were tested by the same method as that in Example 1. The test results are shown in Tables 1 and 2.

**Table 1**

| | Sulfur mass ratio (%) | Cladding temperature (°C) | Charge capacity at 0.1 C (mAh/g) | Discharge capacity at 0.1 C (mAh/g) | first efficiency (%) | Discharge capacity at 1C (mAh/g) |
|---|---|---|---|---|---|---|
| Example 1 Battery A | 0 | - | 230.2 | 199.9 | 86.84 | 186.9 |
| Example 1 Battery B | 0.4 | 500 | 242.6 | 215.7 | 88.92 | 195.4 |
| Example 2 | 0.5 | 500 | 240.7 | 213.4 | 88.67 | 194.2 |
| Example 3 | 0.1 | 500 | 234 | 203.2 | 86.84 | 190.9 |
| Example 4 | 0.05 | 500 | 231.1 | 200.6 | 86.83 | 187.8 |
| Example 5 | 0.6 | 500 | 237.2 | 210.8 | 88.86 | 192 |
| Example 6 | 0.4 | 600 | 240.3 | 213.2 | 88.72 | 194.5 |
| Example 7 | 0.4 | 700 | 235.5 | 203.8 | 86.56 | 189.7 |
| Example 8 | 0.4 | 400 | 236 | 209.72 | 88.86 | 191.1 |
| Example 9 | 0.4 | 900 | 227.3 | 194.71 | 85.66 | 180.24 |

It can be seen from Table 1 that whether the amount of sulfate is higher or lower, it is not conducive to improving the battery property of the lithium-ion battery; and whether the reaction temperature is higher or lower, it is not conducive to improving the battery property of the lithium-ion battery.

**Table 2**

| | Sulfur mass ratio (%) | Reaction temperature (°C) | Li2C03 (%) | LiOH (%) | Total alkali content (%) |
|---|---|---|---|---|---|
| Example 1 Lithium nickel manganate | 0 | - | 0.65 | 0.49 | 1.14 |
| Example 1 Cobalt-free cathode material | 0.4 | 500 | 0.41 | 0.29 | 0.70 |
| Example 2 | 0.5 | 500 | 0.37 | 0.25 | 0.61 |
| Example 3 | 0.1 | 500 | 0.54 | 0.42 | 0.96 |
| Example 4 | 0.05 | 500 | 0.6 | 0.44 | 1.04 |
| Example 5 | 0.6 | 500 | 0.35 | 0.23 | 0.58 |
| Example 6 | 0.4 | 600 | 0.38 | 0.28 | 0.66 |
| Example 7 | 0.4 | 700 | 0.31 | 0.23 | 0.54 |
| Example 8 | 0.4 | 400 | 0.47 | 0.36 | 0.83 |
| Example 9 | 0.4 | 900 | 0.22 | 0.17 | 0.39 |

It can be seen from Table 2 that the more the amount of ammonium sulfate is or the higher the reaction temperature is, the lower the residual alkali content on the surface of the cathode material is, but the worse the battery property of the lithium-ion battery is.

## Claims

1. A method for preparing a cobalt-free cathode material for a lithium-ion battery, comprising:
mixing lithium nickel manganate with a sulfate to obtain a first mixture, wherein the sulfate is a salt of a strong acid and a weak base; and
reacting the first mixture at a predetermined temperature to obtain the cobalt-free cathode material.

2. The preparation method according to claim 1, wherein the sulfate is at least one selected from the group consisting of ammonium sulfate, aluminum sulfate, lithium bisulfate, zirconium sulfate, cerium sulfate and tungsten sulfate.

3. The preparation method according to claim 1 or 2, wherein the predetermined temperature is higher than the melting point of the sulfate.

4. The preparation method according to any one of claims 1 to 3, wherein the predetermined temperature is 500 °C to 900 °C, and the reaction time is 4 hours to 8 hours.

5. The preparation method according to any one of claims 1 to 4, wherein in the first mixture, the mass ratio of sulfur atoms in the sulfate to the lithium nickel manganate is 0.1% to 0.5%.

6. The preparation method according to any one of claims 1 to 5, wherein the reaction of the first mixture is carried out in an oxygen-containing environment, and the volume percentage of oxygen in the oxygen-containing environment is 20% to 100%.

7. The preparation method according to any one of claims 1 to 6, wherein the lithium nickel manganate and the sulfate are mixed by a high-speed mixing equipment for 10 minutes to 20 minutes at a rotational speed of 2000 rpm to 3000 rpm.

8. A cobalt-free cathode material for a lithium-ion battery, comprising lithium nickel manganate and a cladding layer, wherein the cladding layer is cladded on the outer surface of the lithium nickel manganate, and the material of the cladding layer comprises lithium sulfate.

9. The cobalt-free cathode material according to claim 8, wherein the cobalt-free cathode material satisfies at least one of the following conditions:
the free water content of the cobalt-free cathode material is less than 200 ppm;
the specific surface area of the cobalt-free cathode material is 0.2 m²/g to 0.9 m²/g; and
the average particle size of the cobalt-free cathode material is 5 µm to 15 µm.

10. A lithium-ion battery, comprising the cobalt-free cathode material according to claim 8 or 9.
